# EUROPEAN PATENT APPLICATION

(11) **EP 1 992 552 A1**
(43) Date of publication of application: **19.11.2008**
(21) Application number: 07009704.3
(22) Date of filing: 15.05.2007
(51) Int. Cl.: B62J 27/00, B62J 39/00

(54) **Armrest structure of the back-seat of the heavy duty motorcycle**

(71) Applicant: Yicheng Sports Co., Ltd., Changhua 523 (TW)
(72) Inventor: Yen, Yu-Chuan, Changhua 523 (TW)
(74) Representative: Reinhardt, Harry

(57) **Abstract**

The invention relates to an armrest structure of the back-seat of the heavy-duty motorcycle; wherein, the structure is composed of a linking-sleeve (2) and a handle (3) set at both sides of a fix-base (1). One rectangular-and-hollow adjusting trough (11) is respectively set at each side of the arc-shaped fix-base (1) to facilitate bolts (4A) to be fixed around the cover (4) of the oil box after penetrating; a penetrating-hole is respectively set at the outmost end of both sides to be slipped through by bolt for bolt's integrating with the bottom of linking-sleeve (2) after slipping through; an open-cutting trough and a bolting-hole being reserved around the on-slipping hole, after the upper end of the linking-sleeve (2) contacting with the on-slipping hole set at one end of the handle (3), the linking-sleeve (2) and the handle (3) will be integrated as one unit via the bolt's bolting force and the fortifying contact force of the open-cuffing trough.

## Description

### BACKGROUND OF THE INVENTION

### FIELD OF THE INVENTION

The present invention relates to an armrest structure of the back-seat of the heavy-duty motorcycle and is for providing holding-handles which are integrated with a linking-sleeve at both sides of the fix-base around the cover of the oil box of the motorcycle body for back-seat rider's easily holding his hands up by the handles. This can improve the conventional situation that the back-seat rider needs to hold the body of the front-seat rider and will impact his operating the motorcycle.

### DESCRIPTION OF THE RELATED ART

Normally, the back-seat rider will surround the front-seat rider's body, mostly waist, with his hands, and this will limit the front-seat rider's freely operating the motorcycle to instantly tackle the unexpected situation with good flexibility.

### SUMMARY OF THE INVENTION

The first purpose of the invention is to provide an armrest structure of the back-seat of the heavy-duty motorcycle; wherein, the structure of the invention is integrated with a linking-sleeve and a handle set at both sides of the fix-base, which is set at the position of the bolts around the cover of the oil box of the motorcycle body. The integrated linking-sleeve is vertically risen and being positioned and assembled with handle. The back-seat rider can hold the handles instead of surrounding the body of the front-seat rider with hands to limit his operating the motorcycle. Hence, the effect on freeing the front-seat rider's operating the motorcycle and easing the back-seat rider's holding the handles will be achieved.

The second purpose of the invention is to provide an armrest structure of the back-seat of the heavy-duty motorcycle; wherein, one rectangular-and-hollow adjusting trough is respectively set at each side of the arc-shaped fix-base to cooperate with the bolts originally assembled around the cover of the oil box of the motorcycle body to fix components.

The third purpose of the invention is to provide an armrest structure of the back-seat of the heavy-duty motorcycle; wherein, the fix-base can be made on various shapes for matching different models of the motorcycle.

The fourth purpose of the invention is to provide an armrest structure of the back-seat of the heavy-duty motorcycle; wherein, spacers can be set between the fix-base and linking-sleeve to rise the level of the handles for matching the various heights of the back-seat riders.

The fifth purpose of the invention is to provide an armrest structure of the back-seat of the heavy-duty motorcycle; wherein, a handle integrated with a linking-sleeve is respectively set at both sides of the fix-base; a on-slipping hole is set at one end and one open-cutting trough and bolting-hole are set around the on-slipping hole for slipping the upper end of the linking-sleeve through the on-slipping hole and then bolting with bolts to position and fix the linking-sleeve and the handle as one integrated body.

The sixth purpose of the invention is to provide an armrest structure of the back-seat of the heavy-duty motorcycle; wherein, the handle is arc-shaped and can be horizontally adjusted its angle for matching the need of the user to achieve the effect of diversified application.

### BRIEF DESCRIPTION OF THE DRAWINGS

Other features and advantages of the present invention will become apparent in the following detailed description of the preferred embodiments, with reference to the accompanying drawings, in which:
Fig. 1 is a 3-D exploded view of the invention.
Fig. 2-A is a 3-D exploded view after assembling of the invention.
Fig. 2-B is a schematic view of the assembling position of the invention.
Fig. 3 is a schematic view of the invention.
Fig. 4-A is a 3-D exploded view of the invention being matted and raised.
Fig. 4-B is a 3-D view of the assembled present invention being matted and raised.
Fig. 5-A is a 3-D exploded view of the other pattern of the invention.
Fig. 5-B is a 3-D view of the other pattern of the assembled present invention.

### DETAILED DESCRIPTION OF THE PREFERRED EMBODIMENTS

In the detailed description of the preferred embodiments, it should be noted that like elements are indicated by the same reference numerals throughout the disclosure.

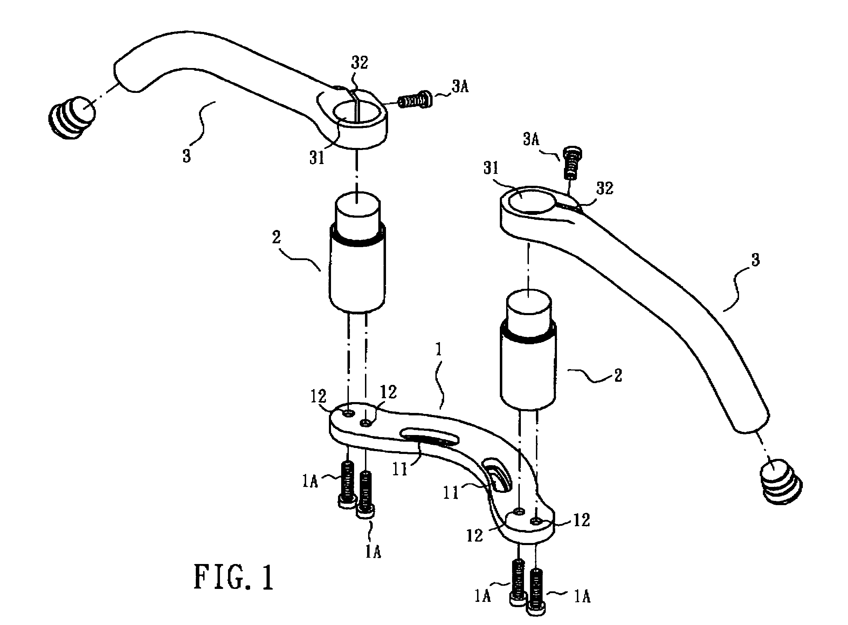

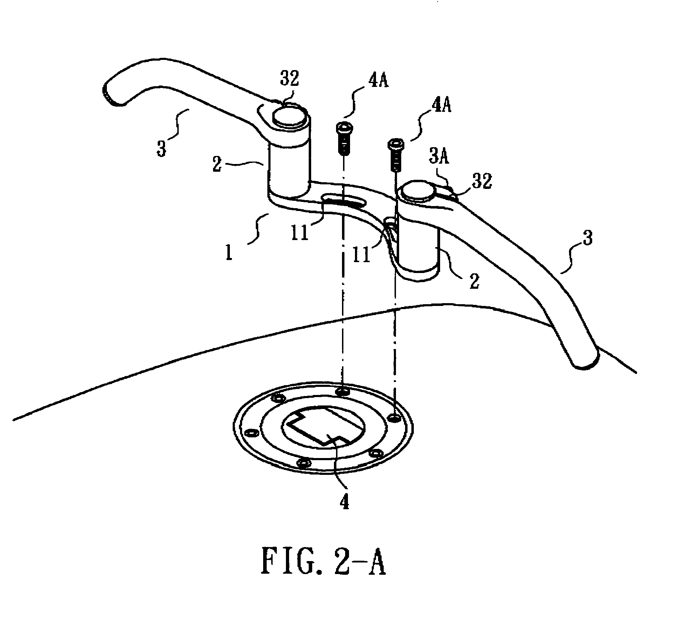

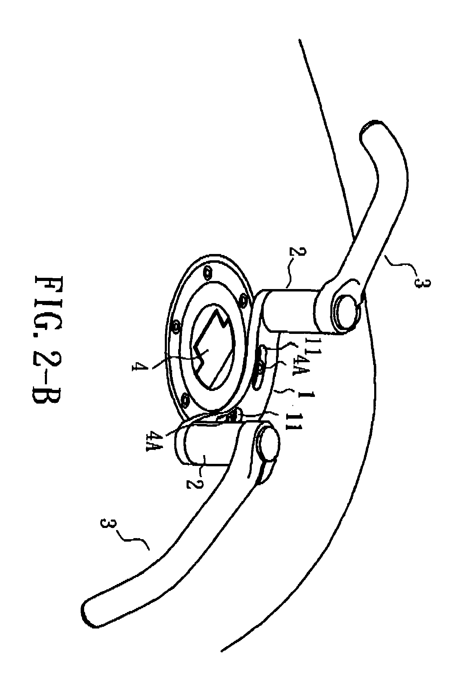

Firstly, please refer to Fig. 1 and Figs. 2-A and 2-B ; the present invention is related to the structure of the armrest of the back-seat of the heavy-duty motorcycle; the armrest structure is composed of one piece of arc-shaped fix-base 1, two pieces of linking-sleeve 2 and two pieces of handle 3. Fix-base 1 is arc-shaped and one rectangular-and-hollow adjusting trough 11 is respectively set at each side of the arc-shaped fix-base to cooperate with bolts 4A originally assembled around cover 4 of the oil box of the motorcycle body to fix and position components after slipping through; a penetrating-hole 12 is respectively set at the outmost end of both sides to be slipped through by bolt 1A for bolt 1A's integrating with the bottom of linking-sleeve 2 after slipping through. Moreover, linking-sleeve 2 is made to two stages with different diameters; one handle 3 integrated with one linking-sleeve 2 and respectively set at both sides of fix-base 1 has one on-slipping hole at one end; moreover, one open-cutting trough 32 and a bolting-hole are set around the on-slipping hole 31.

Assemble linking-sleeve 2 on penetrating-hole 12 of fix-base 1 with bolt 1A; then, assemble and position fix-base 1 on the position of bolts 4A around cover 4 of the oil box of the motorcycle body. Furthermore, slip handle 3 on the upper end of linking-sleeve 2 via on-slipping hole 31; then, bolt 3A is bolted into the threaded hole, and the contact force is fortified by open-cutting trough 32 around on-slipping hole 31 to position and closely combine linking-sleeve 2 with handle 3 as an integrated unit (as shown in Fig. 2-B).

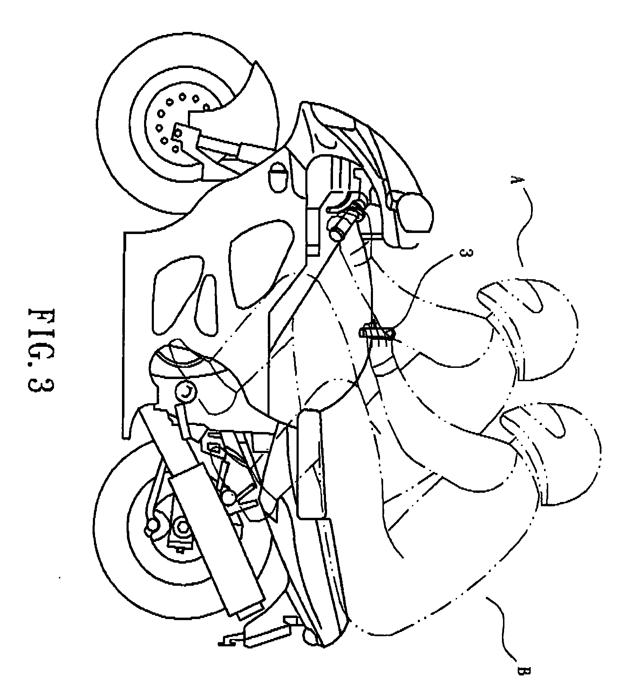

The present invention provide an armrest that back-seat rider B can lay his hands on handles 3 (as shown in Fig. 3) without affecting front-seat rider A's operating the motorcycle. Hence, when riding a conventional motorcycle, front-seat rider A's constraint feeling caused by being surrounded by back-seat rider's hands will be eliminated and the effect of freeing the front-seat rider from being constrained and easing the back-seat rider's holding handles will be achieved.

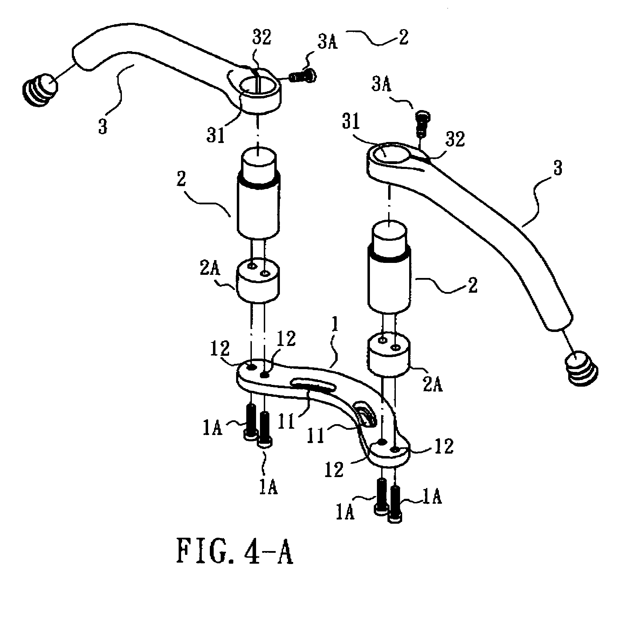

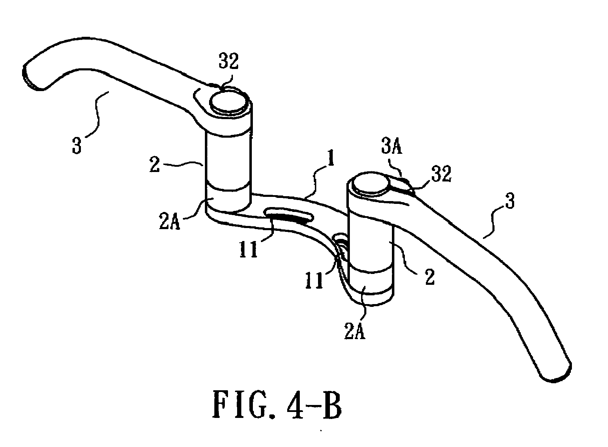

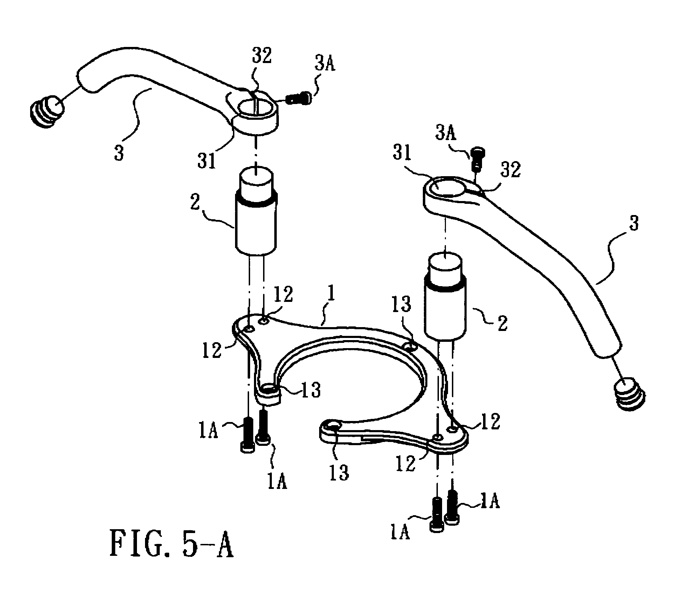

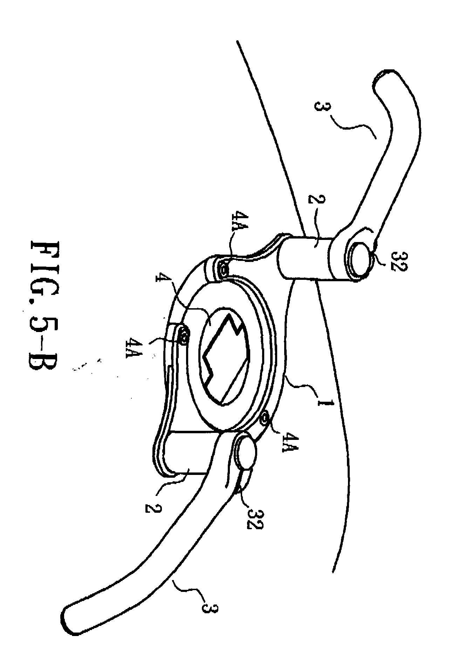

If necessary, spacer 2A can be set between fix-base 1 and linking-sleeve 2 (as shown in Fig. 4-A and 4-B) to rise the level of handle 3 for matching the various heights of the back-seat riders B; meanwhile, handle 3 is are-shaped and can be horizontally adjusted its angle for matching the need of the user to achieve the effect of diversified application. Moreover, fix-base 1 can be made on various shapes (as shown in Fig. 5-A and 5-B) for matching different models of the motorcycle with various positions of penetrating holes 13.

While the description of present invention is made in connection with what is considered the most practical and preferred embodiments, it is understood that this invention is not limited to the disclosed embodiments but intended to cover various arrangements included within the spirit and scope of the broadest interpretations and equivalent arrangements.

## Claims

1. The invention relates to an armrest structure of the back-seat of the heavy-duty motorcycle; the armrest structure is composed of one piece of arc-shaped fix-base , two pieces of linking-sleeve and two pieces of handle, respectively described as follows:
one fix-base is arc-shaped and one rectangular-and-hollow adjusting trough is respectively set at each side of the arc-shaped fix-base to cooperate with bolts originally assembled around cover of the oil box of the motorcycle body to fix and position components after slipping through; a penetrating-hole 12 is respectively set at the outmost end of both sides to be slipped through by bolt for bolt's integrating with the bottom of linking-sleeve after slipping through;
two linking-sleeves are made to two stages with different diameters;
two handles respectively have one on-slipping hole at one end; moreover, one open-cutting trough and a bolting-hole are set around the on-slipping hole; slip handle on the upper end of linking-sleeve via on-slipping hole; then, bolt is bolted into the threaded hole, and the contact force is fortified by open-cutting trough around on-slipping hole to position and closely combine linking-sleeve with handle as an integrated unit;
therefore, the fix-base is assembled on the position of the bolts around the cover of the oil box of the motorcycle and the integrated linldng-sleeve is vertically risen and being positioned and assembled with handle; hence, the back-seat rider can hold the handles instead of surrounding the body of the front-seat rider with hands to limit his operating the motorcycle; consequently, the effect on freeing the front-seat rider's operating the motorcycle and easing the back-seat rider's holding the handles will be achieved.

2. An armrest structure of the back-seat of the heavy-duty motorcycle as claimed in claim 1, wherein said spacers can be set between the fix-base and linking-sleeve to rise the level of the handles for matching the various heights of the back-seat riders.

3. An armrest structure of the back-seat of the heavy-duty motorcycle as claimed in claim 1, wherein said the handle is arc-shaped and can be horizontally adjusted its angle for matching the need of the user to achieve the effect of diversified application.
